Europäisches Patentamt

European Patent Office

Office européen des brevets

(19)

(11) Veröffentlichungsnummer: **0 228 991**
**B1**

(12) # EUROPÄISCHE PATENTSCHRIFT

(45) Veröffentlichungstag der Patentschrift:
18.07.90

(51) Int. Cl.⁵: **F16N 3/12**

(21) Anmeldenummer: 86810514.9

(22) Anmeldetag: 12.11.86

(54) **Handbetätigbare Fettpresse.**

(30) Priorität: 21.11.85 CH 4973/85

(43) Veröffentlichungstag der Anmeldung:
15.07.87 Patentblatt 87/29

(45) Bekanntmachung des Hinweises auf die Patenterteilung:
18.07.90 Patentblatt 90/29

(84) Benannte Vertragsstaaten:
AT BE DE FR GB IT NL SE

(56) Entgegenhaltungen:
CH-B- 525 428
CH-B- 648 917
US-A- 1 996 792
US-A- 2 012 923
US-A- 2 978 151

(73) Patentinhaber: Rüegg, Ernst, Hauptstrasse,
CH-8497 Fischenthal(CH)

(72) Erfinder: Rüegg, Ernst, Hauptstrasse,
CH-8497 Fischenthal(CH)

(74) Vertreter: Bosshard, Ernst, Schulhausstrasse 12,
CH-8002 Zürich(CH)

## Beschreibung

Die Erfindung bezieht sich auf eine handbetätigbare Fettpresse mit einem zum Ansetzen an Schmiernippel bestimmten Mundstück, mit einem eine Fettkammer enthaltenden Zylinderrohr, mit einem ein Fettauslassventil enthaltenden, am einen Ende des Zylinderrohres starr befestigten Kopfstück, am anderen Ende des Zylinderrohres ein Abschlussdeckel angeordnet ist, im Innern des Zylinderrohres zwischen der der Fettkammer abgewandten Seite und dem Abschlussdeckel eine Druckkammer vorhanden ist, und ein in die Druckkammer einmündendes Lufteinlassventil vorhanden ist, wobei die Druckkammer allein durch den hinteren Bereich des Zylinderrohres gebildet ist, dass im Innern des Zylinderrohres ein längsbeweglich geführter Kolben mit zwei Dichtungsorganen vorhanden ist, und der Kolben bei vollständig gefüllter Fettkammer gegen einen in die Druckkammer hineinragenden Anschlag anliegt. (US-A 2 012 923).

Bei an sich bekannten Hand-Fettpressen ist es üblich, dass ein den Fettvorrat gegen die Auslassöffnung drückender Kolben im Innern der Presse durch eine Feder mechanisch belastet wird. Da der Raum zur Aufnahme der Feder begrenzt ist und ein relativ langer Federweg verlangt wird, ergeben sich unbefriedigende auf den Kolben wirkende Druckverhältnisse. Ausserdem kann ohne Austausch der Feder keine Anpassung an unterschiedliche Viskositäten der Schmiermittel vorgenommen werden.

Aus der CH-A 648 917 ist bereits eine Fettpresse mit Druckluftpolster bekannt, bei der sich die Luftkammer zwischen einem die Fettkammer enthaltenden Zylinderrohr und einem dieses aussen umgebenden Mantelrohr befand.

Eine derartige Fettpresse hat sich zwar von der Funktion her bewährt. Nachteilig wird indessen ihr grosser Durchmesser zum Umgreifen mit einer Hand bemängelt. Ausserdem erfordert jene Konstruktion das Anbringen druckdichter Schweissnähte mit entsprechenden Druckprüfungen.

Die US-A 2 012 923 zeigt eine Fettpresse, bei der der Kolben von einer mit Handgriff versehenen Stange geführt wird.

Die hintere Endlage des Kolbens ist durch eine die Kolbenstange umgebende Hülse begrenzt. Zum Nachfüllen mit Fett wird das Zylinderrohr vom Kopfstück abgeschraubt und der Kolben von Hand in die hintere Endlage zurückgezogen, wobei zuvor der Druck in der Luftkammer abgelassen wird.

Aus der US-A 1 996 792 ist ferner eine handbetätigbare Fettpresse bekannt, mit einem im Innern des Zylinderrohres angeordneten Trennbalg zur Aufnahme des Fettes. Die axiale Begrenzung der Druckkammer erfolgt hier durch eine am Boden perforierte Haube, gegen welche der Balg bei vollständiger Fettfüllung anliegt. Die Verwendung eines Balges für diese Zwecke ist unbefriedigend und konnte sich nicht durchsetzen.

Mit der Erfindung soll die Aufgabe gelöst werden, eine vom Aussendurchmesser her handliche, leichte Fettpresse zu schaffen, mit einem vom Kopf her entgegen dem Druck einer Luftkammer füllbaren Fettraum und einem im Innern des Zylinderrohres längsbeweglichen Kolben, mit einem die Kolbenbewegung druckraumseitig begrenzenden Anschlag.

Die Erfindung, mit der diese Aufgabe gelöst werden soll, ist dadurch gekennzeichnet, dass am Kopfstück ein der Druckfüllung mit Fett dienendes Fetteinlassventil vorhanden ist und in das hintere Ende des Zylinderrohres ein gegen die Innenwand des Zylinderrohres anliegendes Rohrstück eingesetzt ist, dessen Stirnfläche einen Anschlag für den Kolben bildet und der Kolben vor dem der Druckkammer zugewandten Dichtungsring eine in der Endlage mit dem Anschlag zusammenwirkende Schulter aufweist.

Die Ausbildung eines Anschlages für den Kolben durch ein gegen die Innenwand des Zylinderrohres anliegendes, in den Druckraum eingesetztes zylindrisches Rohr ist besonders einfach und preisgünstig. Da der Kolben mit seiner Schulter gegen die Stirnseite des eingesetzten Rohrstückes anzuliegen kommt, wird die elastische Ringdichtung nicht beschädigt.

Zudem wird verhindert, dass sich der Kolben in der Anschlagstellung verkanten kann.

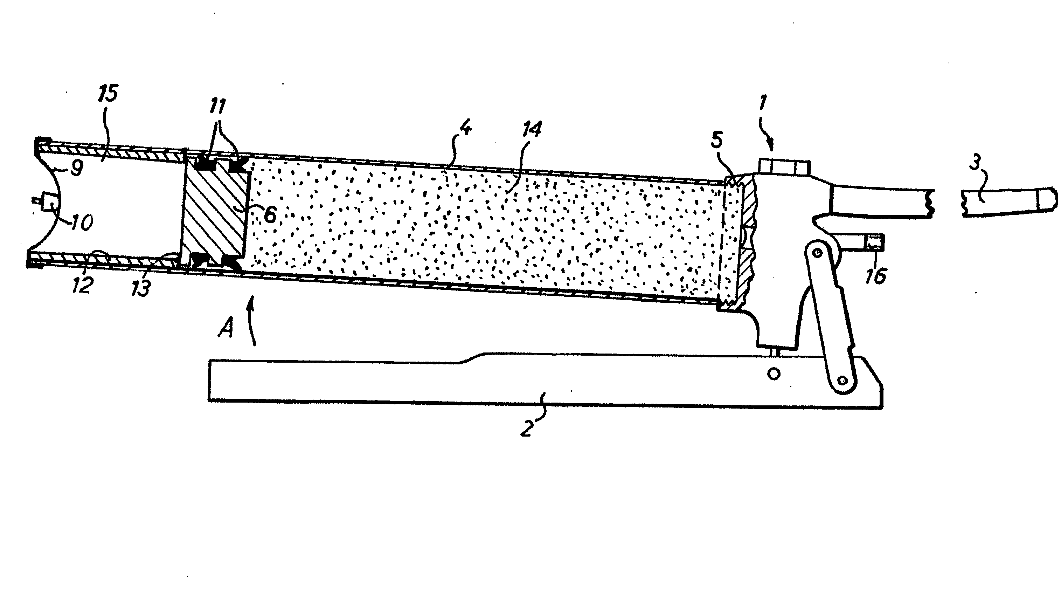

In der Zeichnung ist ein Ausführungsbeispiel des Erfindungsgegenstandes teilweise im Schnitt dargestellt.

Die handbetätigbare Fettpresse ist dazu bestimmt, an Schmiernippeln angesetzt zu werden, wie sie beispielsweise an Maschinen, Motorfahrzeugen und Baumaschinen üblich sind. Ein Kopfstück 1 von an sich bekannter Ausbildung wirkt mit einem Handhebel 2 zusammen, der von Hand in Richtung des Pfeiles A betätigt wird, wenn Fett in Schmiernippel gepresst werden soll. Durch diesen Handhebel 2 wird entweder eine kleine Kolbenpumpe betätigt oder es wird ein über ein biegsames Rohrstück zu einem Mundstück 3 zum Anschluss an Schmiernippel führendes Auslassventil geöffnet. Mit dem Kopfstück 1 ist ein Zylinderrohr 4 starr und dicht verbunden, das in seinem Innern eine Fettaufnahmekammer 14 aufweist. Im Innern dieses aus Metall bestehenden, druckfesten Zylinderrohres 4 befindet sich ein in Axialrichtung beweglicher Kolben 6 mit mindestens zwei Dichtmanschetten 11. Das vom Kopfstück 1 abgewandte Ende des Zylinderrohres 4 ist durch einen Deckel 9 druckdicht verschlossen. Dieser Deckel 9 kann verschweisst oder aufgeschraubt sein und ist mit einer nach innen gerichteten Wölbung versehen. In diesem Wölbungsteil enthält er ein Einlassventil 10 zur Zufuhr von Druckluft oder eines Druckgases. Dieses Einlassventil 10 ist als Rückschlagventil an sich bekannter Konstruktion ausgebildet. Zwischen dem Kolben 6 und dem Deckel 9 befindet sich eine Druckkammer 15. Der Kolben liegt dabei in seiner hintersten Lage gegen eine ringförmige Schulter 13 an, die durch ein in das Innere des Zylinderrohres eingesetztes Rohrstück 12 gebildet wird, das sich bis zum Deckel erstreckt. Das Rohrstück 13 kann in das Zylinderrohr 4 fest eingepresst oder durch Löt- oder Schweissnähte oder -punkte mit dem Zylinderrohr 4 starr verbunden werden. Diese Druckkammer ist somit allein durch den hinteren Teil des Zylinderrohres 4 gebildet und bildet somit eine koaxiale Fortsetzung der Fettaufnahmekammer mit einem um die Wandstärke des Rohrstückes 12 verminderten Durchmesser.

Das Kopfstück l enthält ferner einen mit einem Rückschlagventil versehenen Einlassnippel l6 zum Einfüllen des Fettes. Zu diesem Zweck wird an den Nippel l6 eine handelsübliche, von Hand betätigte Fettpumpe angeschlossen, so dass Fett in die Fettkammer l4 eingepresst und dadurch der Kolben 6 nach hinten bis zur Schulter l3 gedrückt wird. Der Inhalt der Druckkammer l5 beträgt mindestens l/5 des maximalen Inhaltes der Fetkammer l4, vorzugsweise etwa 2/3 bis l/2.

Die Wirkungsweise dieser Fettpresse ist folgende:
Bevor die Fettkammer l4 mit Fett gefüllt wird, nimmt der Kolben 6 eine Position nahe beim Kopfstück l ein. Durch das Einlassventil l0 wird nur beim erstmaligen Füllen Druckluft oder ein Druckgas von etwa 0,5 bar eingelassen. Anstelle von Luft kann auch ein Treibgas verwendet werden. Hernach wird durch den Einlassnippel l6 in der beschriebenen Weise Fett eingepresst, wobei der Einpressdruck grösser ist als der in der Druckkammer 12 erzeugte Gegendruck des Kolbens 6. Mit zunehmender Füllung der Fettkammer l4 bewegt sich somit der Kolben 6 nach hinten und bei vollständiger Füllung der Fettaufnahmekammer l4 liegt der Kolben 6 gegen die Schulter 13 des Rohrstückes 12 an. Da die Luft bzw. das Gas dabei komprimiert wird, entsteht in der hintersten Lage des Kolbens 6 in dieser Druckkammer l5 ein Druck von etwa 3 - 4 bar. Zum Gebrauch dieser Fettpresse wird das am vorderen Ende des Schlauches 3 befindliche Mundstück an einen Schmiernippel angesetzt und der Handhebel 2 in Richtung des Pfeiles A bewegt. Dadurch gelangt Fett unter der auf die Stirnfläche des Kolbens 6 wirkenden Kraft der Druckluft oder des Druckgases in den Schmiernippel. Wenn das sich in der Fettkammer l4 befindliche Fett weitgehend ausgepresst ist, kann die Fettkammer l4 erneut über den Nippel l6 mit Fett nachgefüllt werden. Die sich in der Druckkammer l5 befindliche Luft- bzw. Gasmenge bleibt unverändert, d.h. die Fettpresse kann beliebig oft mit Fett nachgefüllt werden, ohne dass Druckluft oder Druckgas durch das Einlassventil l0 nachgepumpt werden muss. Eine Aenderung des Druckes in der Druckkammer 12 empfiehlt sich nur dann, wenn ein Fett anderer Viskosität verwendet wird oder die Fettpresse bei einer extremen Temperatur gebraucht wird.

Diese Fettpresse lässt sich somit durch eine einfache Handpumpe ab grossem Fettkübel oder -fass preisgünstig nachfüllen, wodurch Einmal-Fettpatronen u. dlg. entfallen.

Bei einer derartigen Fetpresse besteht keine Einsatzbehinderung durch elektrische Kabel oder Druckluftschläuche.

## Patentansprüche

Handbetätigbare Fettpresse mit einem zum Ansetzen an Schmiernippel bestimmten Mundstück (3), mit einem eine Fettkammer (14) enthaltenden Zylinderrohr (4), mit einem ein Fettauslassventil (4) enthaltendes, am einen Ende des Zylinderrohres (4) starr befestigten Kopfstück (1), am anderen Ende des Zylinderrohres (4) ein Abschlussdeckel (9) angeordnet ist, im Innern des Zylinderrohres zwischen der der Fettkammer (14) abgewandten Seite und dem Abschlussdeckel (9) eine Druckkammer (15) vorhanden ist, und ein in die Druckkammer (15) einmündendes Lufteinlassventil (10) vorhanden ist, wobei die Druckkammer (15) allein durch den hinteren Bereich des Zylinderrohres (14) gebildet ist, dass im Innern des Zylinderrohres (4) ein längsbeweglich geführter Kolben (6) mit zwei Dichtungsorganen (11) vorhanden ist, der die Druckkammer (15) von der Fettkammer (14) trennt, und der Kolben (6) bei vollständig gefüllter Fettkammer (14) gegen einen in die Druckkammer (15) hineinragenden Anschlag (12) anliegt, dadurch gekennzeichnet, dass am Kopfstück (1) ein der Druckfüllung mit Fett dienendes Fetteinlassventil (16) vorhanden ist und in das hintere Ende des Zylinderrohres (4) ein gegen die Innenwand des Zyilnderrohres (4) anliegendes Rohrstück (12) eingesetzt ist, dessen Stirnfläche einen Anschlag für den Kolben (6) bildet und der Kolben (6) vor dem der Druckkammer (15) zugewandten Dichtungsring (11) eine in der Endlage mit dem Anschlag zusammenwirkende Schulter (13) aufweist.

## Claims

Manually operated grease gun having a nozzle (3) intended to be attached to lubricating nipples, having a cylindrical tube (4) which contains a grease chamber (14), having a head piece (1) which contains a grease outlet valve (4) and is rigidly fixed to one end of the cylindrical tube (4), at the other end of the cylindrical tube (4) a sealing cover (9) is arranged, a pressure chamber (15) is present in the interior of the cylindrical tube between the side facing away from the grease chamber (14) and the sealing cover (9), and an air inlet valve (10) leading into the pressure chamber (15) is present, the pressure chamber (15) being formed merely by the rear region of the cylindrical tube (14), a longitudinally guided piston (6) having two sealing members (11) is present in the interior of the cylindrical tube (4), said piston separating the pressure chamber (15) from the grease chamber (14), and the piston (6) rests against a stop (12) projecting into the pressure chamber (15) when the grease chamber (14) is completely filled, characterized in that a grease inlet valve (16) serving for the pressure filling with grease is present at the head piece (1), and a tubular part (12) resting against the inner wall of the cylindrical tube (4) is inserted into the rear end of the cylindrical tube (4), the end face of which tubular part forms a stop for the piston (6) and the piston (6) has, in front of the sealing ring (11) facing the pressure chamber (15), a shoulder (13) cooperating with the stop in the end position.

## Revendications

Pompe à graisse manuelle munie d'une buse (3) destinée à être appliquée sur les raccords de graissage, composée d'un tube cylindrique (4) contenant une chamber à graisse (14), d'une pièce de tête (1) contenant un clapet de sortie de graisse (4) et fixée de manière rigide à une extrémité du tube cylindrique (4), d'un couvercle de fermeture (9) disposé à l'autre extrémité du tube cylindrique (4), comportant une chambre de compression (15) a l'intérieur du tube cylindrique entre le côté opposé à la chambre à graisse (14) et le couvercle de fermeture (9), avec une valve d'entrée d'air (10) conduisant à l'intérieur de la chambre de compression (15), la chambre de compression (15) étant simplement formée par la partie arrière du tube cylindrique (14) et un piston (6) guidé longitudinalement muni de deux éléments d'étanchéité (11) et se trouvant à l'intérieur du tube cylindrique (4), ledit piston séparant la chambre de compression (15) de la chamber à graisse (14) et venant en appui contre une butée (12) dépassant à l'intérieur de la chambre de compression (15) quand la chambre à graisse (14) est entièrement remplie, caractérisée par la présence d'un clapet d'entrée de graisse (16) situé dans la chambre de compression (15) quand la chambre à graisse (14) est entièrement remplie, caractérisée par la présence d'un clapet d'entrée de graisse (16) situé dans la pièce de tête (1) et servant au remplissage sous pression de la graisse, et en ce qu'une pièce tubulaire (12) en appui contre la paroi intérieure du tube cylindrique (4) est insérée dans l'extrémité arrière du tube cylindrique (4), la face extrême de cette pièce tubulaire constituant une butée pour le piston (6), et le piston (6) possédant, en avant du joint d'étanchéité (11) en face de la chambre de compression (15), un épaulement (13) associé à la butée en position extrême.